Europäisches Patentamt

(19) **European Patent Office**

Office européen des brevets

(11) Publication number: **0 180 633**
**B1**

(12) EUROPEAN PATENT SPECIFICATION

(45) Date of publication of the patent specification:
**01.03.89**

(51) Int. Cl.⁴: **G 01 P 3/68**

(21) Application number: **85902698.1**

(22) Date of filing: **06.05.85**

(86) International application number:
**PCT/SE 85/00198**

(87) International publication number:
**WO 85/05187 (21.11.85 Gazette 85/25)**

(54) APPARATUS FOR OPTICAL MEASUREMENT OF MOVEMENT OF AN OBJECT.

(30) Priority: **08.05.84 SE 8402480**

(43) Date of publication of application:
**14.05.86 Bulletin 86/20**

(45) Publication of the grant of the patent:
**01.03.89 Bulletin 89/9**

(84) Designated Contracting States:
**AT BE CH DE FR GB IT LI LU NL**

(56) References cited:
**FR-A- 7 821 712**
**GB-A- 964 581**
**US-A- 3 689 157**
**US-A- 3 799 671**
**US-A- 3 991 398**

(73) Proprietor: **STIFTELSEN INSTITUTET FÖR MIKROVÄGSTEKNIK VID TEKNISKA HÖGSKOLAN I STOCKHOLM, Box 70033, S-10044 Stockholm (SE)**

(72) Inventor: **BERGLIND, Eilert, Getvägen 53, S-183 47 Täby (SE)**
Inventor: **ERIKSSON, Bengt, Knipvägen 49, S-184 00 Akersberga (SE)**
Inventor: **SJÖLUND, Anders, Gyllenstiernas väg 9, S-183 50 Täby (SE)**

(74) Representative: **Örtenblad, Bertil Tore, Noréns Patentbyra AB Banérgatan 73, S-11526 Stockholm (SE)**

## Description

The present invention relates to apparatus for optically measuring movement, primarily rotational movement.

Thus, the movement referred to here is both rotational movement effected by an object and the movement of an object in a single plane. With regard to the rotational movement of an object, the parameter measured is particularly the angular velocity of the object and/or the diameter thereof when the object is of circular-cylindrical configuration.

Apparatuses for measuring optically the movement of a surface in a single plane with the aid of optical sensors are known to the art. Apparatuses of this kind are disclosed in Swedish Patent Specification No. 329 735 for example.

One such apparatus is based on the fundamental principle of using two sensors, each being adapted to transmit light which, when reflected by the surface of an object, is received by the sensor having transmitted the light. Thus, provided that the two sensors are in mutual alignment with a line extending parallel with the direction in which the object moves, both sensors will produce substantially equivalent electric signals, where the signal of one sensor is displaced or shifted in time relative to the signal of the second sensor. This time shift, which is a measurement of the speed at which the object moves past the sensors, is determined by correlation technique.

The use of two separate sensors has been found beset with difficulties when wishing to measure the velocity of curved surfaces, since the distance between the sensors must be such that no light is transmitted from the transmitter of one sensor to the receiver of the other sensor, as hereinafter made apparent.

The US Patent Specification No. 3 799 671 shows a recording head where only one light-source is used. An optical system divides said beam into two separate beams. These beams are reflected on the object. Each of the two reflected beams is sensed by a separate photo-electric device. Thus, the embodiment operates as if two separate sensors would be used.

In addition, apparatuses of this kind known hitherto have most often been adapted to transmit laser light, so as to enable the requisite accuracy to be achieved.

It has surprisingly been found that when using an apparatus according to the invention it is not necessary to use laser light, not even when measuring highly reflective objects, since the same measuring accuracy can also be achieved with light of a different kind. More specifically, it has been established that it is possible to obtain sufficiently high correlation between two signals while using light which is far less well-defined than laser light.

Other advantages afforded by an apparatus according to the invention, which will be made apparent hereinafter, include, inter alia, the fact that its sensors have considerably smaller dimensions than known sensor arrangements and that cylindrical objects of mutually different diameter can be measured with the same sensor without appreciably affecting the accuracy of the measurements.

Thus, the present invention relates to apparatus for optically measuring movement of an object, including means adapted to transmit light onto a surface of the object, and means adapted to receive light reflected by said surface and adapted to produce an electrical signal corresponding to light received from each of a number of mutually spaced light-receiving elements; and a signal processing circuit incorporating a correlator for determining the relative time shift of the two electric signals, this time shift constituting a measurement of the speed of the object and wherein said means comprises a sensor having solely one first light waveguide arranged to transmit light, said waveguide being positioned symmetrically between a second and a third light waveguide adapted to receive light thus transmitted from said first waveguide and reflected by the surface of the object; and in that the centres of the light-emitting and light-receiving apertures of the three waveguides are placed on a line.

The invention will now be described in more detail, partly with reference to an embodiment thereof illustrated in the accompanying drawing, in which

– Fig. 1 is a side view of a sensor according to the invention;

– Fig. 2 is a block schematic illustrating apparatus for measuring the movement of an object, angular velocity and/or diameter in accordance with the invention;

– Fig. 3 is a drawing illustrating how certain parameters can be determined.

Figure 2 is a block schematic illustrating apparatus according to the invention for measuring optically the movement of an object. The apparatus includes means 1 for transmitting light to the surface 3 of the object 2, and means 4 adapted to receive light reflected from said surface. The means 4 is adapted to produce an electric signal corresponding to the light received by each of two mutually space light-receiver elements. The apparatus further includes a signal processing circuit 5 comprising a correlator 6 for determining the relative time shift ($\tau$) of the two electric signals, this time shift constituting a measurement of the speed of the object 2.

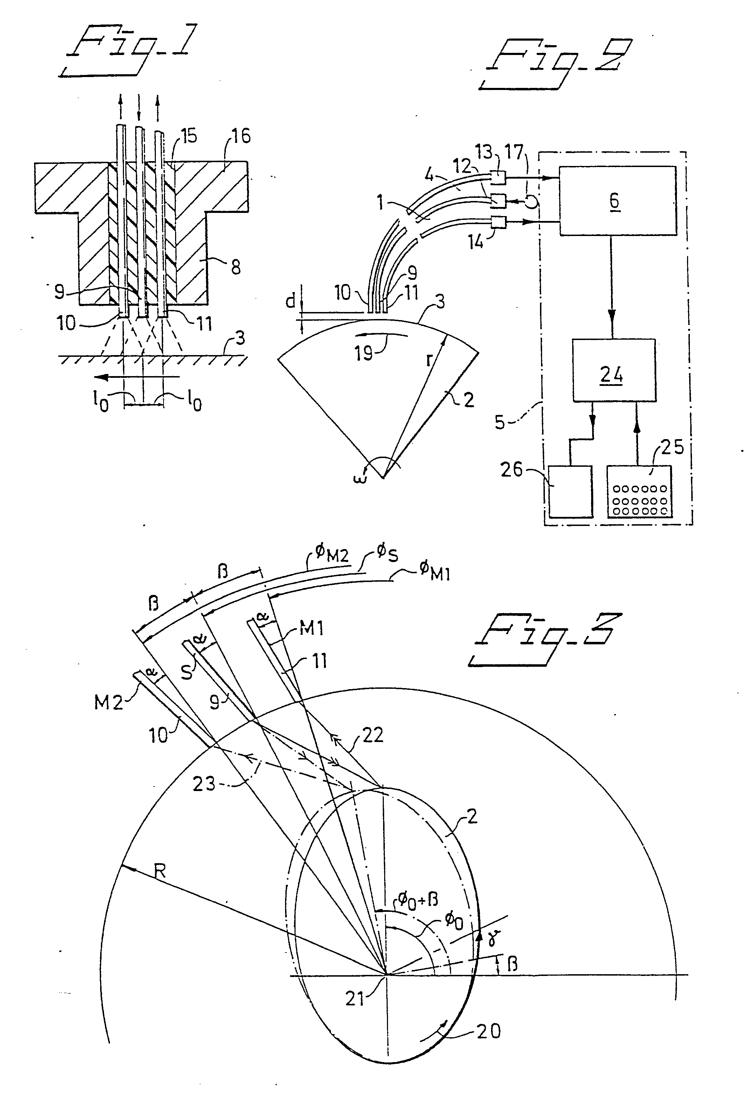

In accordance with the invention the aforesaid means comprises a sensor 8, see Figure 1, having solely one first light waveguide 9 for transmitting light, which is positioned symmetrically between a second and a third light waveguide 10, 11 adapted to receive the light transmitted from said first waveguide and reflected from the surface of the object.

The centres of the light-emitting and light-receiving apertures of the three waveguides are placed on a straight line, such that each waveguide will respectively illuminate and sense the same section of an object as the object moves in the direction of the line.

When using the sensor 8, the sensor is oriented so that the straight line is approximately parallel with the direction of movement of the object.

The waveguides 9, 10, 11 may comprise, for example, optical fibres, fibre-bundles, or waveguide channels on an optically integrated circuit.

According to a preferred embodiment, however, each light waveguide comprises solely optical fibres. According to a further embodiment the distance $1_0$ between each of the waveguides 9, 10, 11 is of the same order of magnitude as the diameter or like dimension of the waveguides, which is preferably less than 200 μm. So-called monomode fibres can also be used. This enables a sensor according to the invention to be given very small dimensions, which has obvious important advantages, as will be seen from the following.

The light-transmitting waveguide 9 is connected to a light-emitting element 12 for generating suitable light. Each of the two remaining waveguides 10, 11 is connected to a respective light-sensitive element 13, 14.

As shown in Figure 1, respective waveguides transmit and receive light within a given acceptance area, illustrated in broken lines in Figure 1, this area being greater than the light-transmitting or light-receiving apertures or end surfaces of respective light waveguides.

It will be understood that the acceptance area of the light-receiving waveguides will partially overlap the surface illuminated by the light-transmitting waveguides.

Thus, the present invention is based on the concept of using solely one light-transmitting waveguide for illuminating the surface of an object and of using two light-receiving waveguides for receiving the same transmitted light reflected from different locations on the surface of the object, these light-receiving waveguides being positioned on a respective side of the light-transmitting waveguide. A further essential feature in addition to the use of solely one light-transmitting waveguide or conductor is that said conductor is symmetrically located in relation to the flanking light-receiving waveguides. As a result of this particular construction it is no longer necessary to use two sensors which must be held separated in space, as with previously known arrangements, but that the sensors present may be given very small dimensions, as previously mentioned. This enables the distance $1_0$ to be made very small in relation to the radius of a rotating object, thereby rendering the apparatus particularly suitable for measuring the angular velocity and/or diameter of a rotating object.

A further advantage is that the sensor need not be aligned relative to the object so that a line passing through the apertures of respective waveguides is precisely parallel with the direction in which the surface of the object moves. Experiments have shown that correlation can be obtained in certain instances even when the aforesaid line forms an angle of up to 45° with the direction of movement of the object.

The sensor according to the present invention also has the effect of enabling non-coherent light to be used, even when the object has a glossy surface. Thus, there can be used visible or infrared light produced with the aid of a light-emitting element 12 in the form of a conventional simple light diode.

With such light there is obtained a high degree of correlation when measuring against both glossy objects and dull objects, although resolution is poorer in the case of dull objects.

Consequently, the use of laser light is not a preference with apparatus according to the invention, which among other things greatly reduces the cost of the apparatus.

The small geometrical dimensions of the sensor also afford advantages with regard to certain fields of application where access if limited.

With reference to Figure 1 it will be seen that the three waveguides 9, 10, 11 are, for example, consolidated in a plastics material 15 in a sleeve 16, in a manner to maintain the mutual positions of the waveguides.

The light-emitting element 12 is powered by a voltage source 17.

The light-sensitive elements 13, 14 comprise elements, for example photodiodes, suitable for the light used. The light-sensitive elements 13, 14 are connected to the correlator 6, in which the signals from the elements are correlated and the time shift τ between the signals is determined in a known manner. The time shift τ prevailing between the signals is thus established and subsequently utilized.

Figure 3 illustrates the significance of certain parameters with a sensor according to the invention.

In Figure 3 there is illustrated an object 2 which rotates in a direction 20 around an axis 21. The light-transmitting conductor 9 is hereinafter referenced $\underline{S}$ and the light-receiving conductor 10, 11 are referenced M1 and M2 respectively.

Although the illustrated object has the form of an elliptical cylinder 2 it will be understood that other forms can be used.

The centres of the apertures of the three waveguides are located at a constant distance R from the axis 21, in a plane extending at right angles to said axis. The waveguides are oriented uniformly on the axis, as indicated with the angle α for the three waveguides. As beforementioned the light waveguide S is located symmetrically between the light waveguides M1 and M2, i.e. $\Phi_{M2} = \Phi_S + \beta$

and $\Phi_S = \Phi_{M1} + \beta$.

When the object rotates, the waveguide M2 receives light which is converted to an electric signal S2 ($\Phi_o$), where $\Phi_o$ is the rotation of the object. Correspondingly, the waveguide M1 gives rise to an electric signal S1 ($\Phi_o$). S2($\Phi_o$) will now equal S1 ($\Phi_o - \beta$), i.e. the signal S2 lies β radians behind the signal S1.

The signal S1 is dependent on the structure or

properties E ($\gamma$) of the surface of the object, where $\gamma$ is a parameter describing the position of the surface. The signal is also dependent on the orientation of the light waveguides in relation to the surface, which can be described by the function G ($\Phi_S$, $\Phi_{M1}$, $\Phi_o$, $\gamma$), where $\Phi_S$ is the position of the transmitter, $\Phi_{M1}$ is the position of the receiver, $\Phi_o$ is the rotation of the body, and $\gamma$ is the coordinate on the surface.

The signal S1 is given by a sum or integral of the points illuminated

$$S (\Phi_o) = \int G (\Phi_S, \Phi_{M1}, \Phi_o, \gamma) \, E (\gamma) \, d\gamma$$

Similarly the signal S2 is given by the following integral

$$S2 (\Phi_o) = \int G (\Phi_S, \Phi_{M2}, \Phi_o, \gamma) \, E (\gamma) \, d\gamma$$

By applying the rule of reciprocity and translation it can be shown that

$$S_2 (\Phi_o) = S1 (\Phi_o - \beta)$$

This is illustrated in the figure, which shows that an arbitrary beam 22 between S and M1 returns as a beam 23 between S and M2 similar to beam 22 with the exception of direction when the object has been rotated through $\beta$ radians.

The signal S2 is therefore delayed $\beta$ radians in relations to the signal S1.

This delay is the aforementioned time shift $\tau$, which can be measured with the aid of correlation technique, where the relationship $\tau = \beta/\omega$, where $\omega$ is the angular velocity, prevails. Conversely, the angular velocity can be determined $\omega = \beta/\tau$.

With regard to measuring the planar velocity of an object, $R \rightarrow \infty$. It follows from this that the velocity $v$ of the object is given by the equation $v = 1_o/\tau$.

In accordance with a preferred embodiment of the invention, the signal processing circuit 5 includes a calculating unit 24, such as a microprocessor, for calculating, for example, the velocity $v$ from the equation $v = 1_o/\tau$, where $1_o$ is introduced into the microprocessor 24, through a keyboard 25 for exemple. The result is shown on a suitable display means 26, such as a display screen, a writer or like device.

As beforementioned, the present apparatus is particularly suited for measuring the angular velocity and/or the diameter of a circular-cylindrical object.

The angular velocity $\omega$ is obtained from the relationship $\omega = \beta/\tau$. Because the present sensor can be given small dimensions, $\beta$ will also be small, and hence $\omega$ can be calculated from the relationship $\omega = 1_o/R \cdot \tau$. In addition, the sensor may have a form as though R were equal to infinity, i.e. the centres of the apertures lie on a straight line at the distance $1_o$ and are parallel oriented. A high degree of measuring accuracy can be achieved despite this.

According to a preferred embodiment of the apparatus for measuring the angular velocity of a rotating object, the signal processing circuit 5 is adapted, with the aid of the microprocessor 24, to calculate the angular velocity $\omega$ from the equation $\omega = 1_o/R \cdot \tau$, where the parameters $1_o$ and R are inserted into the microprocessor.

The present apparatus can also be used to advantage to measure the diameter 2r of a rotating cylindrical object.

The equation $R = 1_o/\tau \cdot \omega'$ is used, where the angular velocity $\omega'$ is given, for example by measuring with the aid of another transducer.

The equation $R = r + d$ also applies, where $d$ is the radial distance between the surface of the object and the aperture centres of the respective light waveguides, see Figure 2.

The distance $d$ is determined by measuring or by an abutting device arranged to maintain the distance $d$ constant.

The diameter 2r is therewith given by the relationship

$$2r = 2(1_o/\tau \cdot \omega' - d)$$

It will be understood that both external and internal diameters can be measured.

Since the sensor according to the invention can be given small dimensions, i.e. the distance $1_o$ can be made small, the relationship $\beta \cdot R = 1_o << r$, i.e. the radius of the object is large in relation to the distance $1_o$, is true for the majority of applications conceivable, for example measurement of the diameter of shafts or wheels under manufacture. Consequently the light waveguides may be designed as though $R \rightarrow \infty$, i.e. may be mutually parallel and have a mutual interspace of $1_o$. A high degree of measuring accuracy can be achieved in spite of this.

Accordingly, according to a further preferred embodiment of the apparatus for measuring the diameter of an object, the aforesaid signalling processing circuit 5 is arranged to calculate, with the aid of the microprocessor 24, the diameter 2r from the relationship $2r = 2(1_o/\tau \cdot \omega' - d)$, where the parameters $1_o$, $d$ and $\omega'$ are inserted into the microprocessor.

As is clearly evident from the aforegoing, the structural design of the sensor incorporating solely one light-transmitting waveguide flanked by two light-receiving waveguides enables the sensor to be given small dimensions, i.e. the distance $1_o$ can be made small. In turn, this enables the angular velocity and diameter of the cylindrical rotating object to be determined with a high degree of accuracy, which is much more difficult to achieve with conventional transducers, if at all possible.

It will be understood that when reference is made in the aforegoing to a sensor which can be given small dimensions as a result of its construction, these dimensions are in relation to the object against which it is directed to measure parameters thereof. It will also be seen, however, that the sensor can be given small dimensions in absolute terms, compared with the known technique in which two sensors and their distance apart shall be taken into account.

The present invention is not restricted to a sensor of any particular size, however.

According to one preferred embodiment in which the light used is laser light, the light-transmitting fibre may comprise a so-called mono-mode fibre, while the light-receiving fibres may comprise so-called multimode fibres.

This affords the advantage that the light-transmitting fibre is insensitive to vibrations.

The technical structural design of the sensor, and also the structural design of the aforedescribed electronics can be modified without departing from the concept of the invention.

Thus, the present invention is not restricted to the aforedescribed embodiments, and modifications can be made within the scope of the following claims.

## Claims

1. Apparatus for optically measuring movement of an object, including means adapted to transmit light onto a surface of the object, and means adapted to receive light reflected by said surface and adapted to produce an electrical signal corresponding to light received from each of a number of mutually spaced light-receiving elements; and a signal processing circuit (5) incorporating a correlator (6) for determining the relative time shift ($\tau$) of the two electric signals, this time shift constituting a measurement of the speed of the object, characterized in that said means comprises a sensor (8) having solely one first light waveguide (9) arranged to transmit light, said waveguide (9) being positioned symmetrically between a second and a third light waveguide (10, 11) adapted to receive light thus transmitted from said first waveguide and reflected by the surface of the object; and in that the centres of the light-emitting and light-receiving apertures of the three waveguides (9, 10, 11) are placed on a line.

2. Apparatus according to claim 1, characterized in that each of said waveguides (9, 10, 11) comprises light-conducting fibres which are connected to a light-emitting element (12) and two light-sensitive elements (13, 14) respectively.

3. Apparatus according to claim 1 or 2, characterized in that each of said waveguides (9, 10, 11) comprises solely one light conducting fibre, such as a glass fibre, where one fibre is connected to a light-emitting element (12) and two fibres are each connected to a respective light-sensitive element (13, 14).

4. Apparatus according to claim 1, 2 or 3, characterized in that the distance ($1_o$) between each of two adjacent waveguides (9, 10, 11) is of the same order of magnitude as the diameter or like dimension of the waveguides (9, 10, 11) this diameter or like dimension preferably being less than 2 μm.

5. Apparatus according to claim 1, 2, 3 or 4, characterized in that the light-emitting element (12) comprises a light source, such as a light diode, adapted to transmit non-coherent light.

6. Apparatus according to Claim 1, 2, 3 or 4, for measuring the angular velocity of a rotating object, characterized in that said signal processing circuit (5) is adapted to calculate the angular velocity ($\omega$) from the relationship $\omega = 1_o/R \cdot \tau$, where $1_o$ is the distance between the said apertures of each of the receiving waveguides (10, 11), and the aperture of the transmitting waveguide (9), where R is the radial distance from the rotational centre of the object to said apertures and where $\tau$ is said time shift.

7. Apparatus according to Claim 1, 2, 3, 4, 5, or 6, for measuring the diameter of a rotating object of constant diameter, characterized in that said signal processing circuit (5) is adapted to calculate the diameter 2r from the relationship $2r = 2 (1_o/\tau \cdot \omega' - d)$, where $r$ is the radius of the object, wehre $1_o$ is the distance between said apertures of each of the receiving waveguides (10, 11) and said aperture (9) of the transmitting waveguide, where $\omega'$ is the angular velocity of the object, where $\tau$ is the time shift, and where $d$ is the radial distance between the surface of the object and said apertures of respective waveguides (9, 10, 11).

8. Apparatus according to any one of the preceding claims, characterized in that the light-transmitting waveguide (9) comprises a so-called monomode fibre; and in that the remaining two waveguides (10, 11) comprise so-called multimode fibres.

9. Apparatus according to any one of the preceding claims, intended for measuring the angular velocity and/or diameter of an object, characterized in that the apertures of the three waveguides (9, 10, 11) are aligned on the rotational centre of the object.

10. Apparatus according to any one of the preceding claims, characterized in that each of said waveguides comprises a waveguide channel on an integrated circuit.

## Patentansprüche

1. Optische Messvorrichtung der Bewegung eines Gegenstandes mit zur Lichtübertragung auf die Oberfläche des Gegenstandes geeigneten Mitteln und mit zum Empfang des von der Oberfläche reflektierten Lichtes geeigneten Mitteln, die auch geeignet sind, ein elektrisches, dem von jeweils einer Anzahl voneinander getrennter Lichtempfängerelementen entgegengenommen Licht entsprechendes Signal zu erzeugen; sowie einen Signalbearbeitungskreis (5), der einen Korrelator (6) zur Bestimmung der relativen Zeitverschiebung ($\tau$) der beiden elektrischen Signale enthält, wobei die Zeitverschiebung ein Mass der Geschwindigkeit des Gegenstandes beinhaltet, dadurch gekennzeichnet, dass die Mittel einen Fühler (8) umfassen, der lediglich eine erste Lichtwellenführung (9) zur Lichtübertragung aufweist, wobei dei Wellenführung (9) symmetrisch zwischen einer zweiten und einer dritten, zum Empfang des von der ersten Wellenführung ausgesandten und von der Oberfläche des Gegenstandes reflektierten Lichtes geeigneten Wellenführung (10, 11) angeordnet ist; und dass die Mittpunkte der lichtsendenden und lichtempfangenden Öffnungen der drei Wellenführungen (9, 10, 11) längs einer Geraden angeordnet sind.

2. Vorrichtung gemäss Patentanspruch 1, dadurch gekennzeichnet, dass jede der Wellenführungen (9, 10, 11) lichtübertragende Fasern enthält, die mit einem lichtsendenden Element (12) und zwei lichtempfindlichen Elementen (13, 14) verbunden sind.

3. Vorrichtung gemäss Patentanspruch 1 oder 2, dadurch gekennzeichnet, dass jede der Wellenführungen (9, 10, 11) lediglich eine lichtübertragende Faser, beispielsweise eine Glasfaser, enthält, wobei die eine Faser mit einem lichtsendenden Element (12) und zwei Fasern jeweils mit einem entsprechenden lichtempfindlichen Element (13, 14) verbunden sind.

4. Vorrichtung gemäss Patentanspruch 1, 2 oder 3, dadurch gekennzeichnet, dass der Abstand ($1_o$) zwischen jeweils zwei benachbarten Wellenführungen (9, 10, 11) von gleicher Grössenordnung wie der Durchmesser oder ein ähnliches Mass der Wellenführungen (9, 10, 11) ist, wobei dieser Durchmesser oder ähnliches Mass vorzugsweise weniger als 200 μm beträgt.

5. Vorrichtung gemäss Patentanspruch 1, 2, 3 oder 4, dadurch gekennzeichnet, dass das lichtsendende Element (12) eine Lichtquelle, beispielsweise eine Lichtdiode, umfasst, die nicht-kohärentes Licht übertragen kann.

6. Vorrichtung gemäss Patentanspruch 1, 2, 3 oder 4 zur Messung der Winkelgeschwindigkeit eines sich drehenden Gegenstandes, dadurch gekennzeichnet, dass der Signalbearbeitungskreis (5) im Stande ist, die Winkelgeschwindigkeit (ω) aus der Beziehung $\omega = 1_o/R \cdot \tau$ zu berechnen, wobei $1_o$ der Abstand zwischen den Öffnungen jeder der empfangenden Wellenführungen (10, 11) und der Öffnung der übertragenden Wellenführung (9) ist, und wobei R der radiale Abstand zwischen dem Drehmittelpunkt des Gegenstandes und den Öffnungen und wo τ die genannte Zeitverschiebung ist.

7. Vorrichtung gemäss Patentanspruch 1, 2, 3, 4, 5 oder 6 zur Messung des Durchmessers eines sich drehenden Gegenstandes gleichbleibenden Durchmessers, dadurch gekennzeichnet, dass der Signalbearbeitungskreis (5) im Stande ist, den Durchmesser 2r aus der Beziehung $2r = 2(1_o/\tau \cdot \omega' - d)$ zu errechnen, wobei r der Radius des Gegenstandes, $1_o$ der Abstand zwischen den Öffnungen jeder der empfangenden Wellenführungen (10, 11) und der Öffnung der übertragenden Wellenführung (9) ist, ω' die Winkelgeschwindigkeit des Gegenstandes, τ die Zeitverschiebung und d der radielle Abstand zwischen der Oberfläche des Gegenstandes und den Öffnungen der entsprechenden Wellenführungen (9, 10, 11) ist.

8. Vorrichtung gemäss einer der vorhergehenden Patentansprüche, dadurch gekennzeichnet, dass die lichtübertragende Wellenführung (9) sogenannte mono-mode Fasern enthält; und dass die verbleibenden beiden Wellenführungen (10, 11) sogenannte multi-mode Fasern umfassen.

9. Vorrichtung gemäss einer der vorhergehenden Patentansprüche zur Messung der Winkelgeschwindigkeit und/oder des Durchmessers eines Gegenstandes, dadurch gekennzeichnet, dass die Öffnungen der drei Wellenführungen (9, 10, 11) auf der Drehachse des Gegenstandes ausgerichtet sind.

10. Vorrichtung gemäss einer der vorhergehenden Patentansprüche, dadurch gekennzeichnet, dass jede der Wellenführungen einen Wellenführungskanal eines integrierten Kreises umfasst.

**Revendications**

1. Dispositif de mesure optique du mouvement d'un objet, comprenant des moyens adaptés pour transmettre de la lumière sur une surface de l'objet et des moyens adaptés pour recevoir la lumière réfléchie par ladite surface et adaptés pour produire un signal électrique correspondant à la lumière reçue de chacun d'un certain nombre d'éléments photorécepteurs mutuellement espacés; et un circuit de traitement de signal (5) incorporant un corrélateur (6) pour déterminer l'intervalle de temps relatif (τ) de deux signaux électriques, cet intervalle de temps constituant une mesure de la vitesse de l'objet, caractérisé en ce que lesdits moyens comprennent un capteur (8) présentant seulement un premier guide d'ondes lumineuses (9) disposé pour transmettre de la lumière, ledit guide d'ondes (9) étant positionné symétriquement entre un second et un troisième guide d'ondes lumineuses (10, 11) adaptés pour recevoir la lumière ainsi transmise depuis ledit premier guide d'ondes et réfléchie par le surface de l'objet; et en ce que les centres des orifices photoémetteurs et photorécepteurs des trois guides d'ondes (9, 10, 11) sont placés en ligne.

2. Dispositif selon la revendication 1, caractérisé en ce que chacun desdits guides d'ondes (9, 10, 11) contient des fibres optiques respectivement reliées à un élément photoémetteur (12) et à deux éléments photosensitifs (13, 14).

3. Dispositif selon la revendication 1 ou 2, caractérisé en ce que chacun desdits guides d'ondes (9, 10, 11) contient seulement une fibre optique, telle qu'une fibre de verre, dans lequel une fibre est reliée à un élément photoémetteur (12) et deux fibres sont chacune reliées à un élément photosensitif respectif (13, 14).

4. Dispositif selon la revendication 1, 2 ou 3 caractérisé en ce que la distance ($1_o$) entre deux guides d'ondes adjacents (9, 10, 11) est du même ordre de grandeur que le diamètre ou la dimension similaire des guides d'ondes (9, 10, 11), ce diamètre ou cette dimension similaire étant inférieure à 200 μm.

5. Dispositif selon la revendication 1, 2, 3 ou 4, caractérisé en ce que l'élément photoémetteur (12) comprend une source lumineuse telle qu'une photodiode, adaptée pour transmettre une lumière non cohérente.

6. Dispositif selon la revendication 1, 2, 3 ou 4, pour mesurer la vitesse angulaire d'un objet tournant, caractérisé en ce que ledit circuit de traitement du signal (5) est adapté pour calculer la vitesse angulaire ($\omega$) à partir de la relation $\omega = 1_0/R \cdot \tau$, dans laquelle $1_0$ est la distance entre lesdits orifices de chacun des guides d'ondes récepteurs (10, 11) et l'orifice du guide d'onde transmetteur (9), R est la distance radiale desdits orifices par rapport au centre de rotation de l'objet et $\tau$ est ledit intervalle de temps.

7. Dispositif selon la revendication 1, 2, 3, 4, 5 ou 6, pour mesurer le diamètre d'un objet tournant de diamètre constant, caractérisé en ce que ledit circuit de traitement de signal (5) est adapté pour calculer le diamètre (2r) à partir de la relation $2r = 2 (1_0/\tau \cdot \omega' - d)$, dans laquelle $\underline{r}$ est le rayon de l'objet, $1_0$ est la distance entre lesdits orifices de chaque guide d'onde récepteur (10, 11) et ladite orifice (9) du guide d'onde transmetteur, $\omega'$ est la vitesse angulaire de l'objet, $\tau$ est l'intervalle de

temps et $\underline{d}$ est la distance radiale entre la surface de l'objet et lesdits orifices des guides d'ondes respectifs (9, 10, 11).

8. Dispositif selon l'une quelconque des revendications précédentes, caractérisé en ce que le guide d'onde transmetteur (9) comprend ce que l'on appelle une fibre monomode, et en ce que les deux guides d'ondes restants (10, 11) comprennent ce que l'on appelle des fibres multimodes.

9. Dispositif selon l'une quelconque des revendications précédentes, destiné à mesurer la vitesse angulaire et/ou le diamètre d'un objet, caractérisé en ce que les orifices des trois guides d'ondes (9, 10, 11) sont alignés sur le centre de rotation de l'objet.

10. Dispositif selon l'une quelconque des revendications précédentes, caractérisé en ce que chacun desdits guides d'ondes comprend un canal de guide d'ondes sur un circuit intégré.

EP 0 180 633 B1

Fig_1

Fig_2

Fig_3